# EUROPEAN PATENT APPLICATION

(11) **EP 4 759 510 A2**
(43) Date of publication of application: **17.06.2026**
(21) Application number: 25212029.0
(22) Date of filing: 29.10.2025
(51) Int. Cl.: B29C 48/00, B29C 48/10, B29C 55/28

(54) **INFLATION MOLDING APPARATUS AND INFLATION MOLDING METHOD**

(30) Priority: 10.12.2024 JP 2024215129
(71) Applicant: Sumitomo Heavy Industries Modern, Ltd., Kanagawa 223-8511 (JP)
(72) Inventor: SHIOTA, Takahiro, Kanagawa 223-8511 (JP)
(74) Representative: Louis Pöhlau Lohrentz

(57) **Abstract**

It is possible to automatically suppress or eliminate air pockets that may be generated in a case where a cylindrical film (200) subjected to inflation molding is folded. An inflation molding apparatus (1, 2) includes a punching roll (10) that punches holes in a cylindrical film (200), which is molded by feeding air toward a molten resin extruded into a cylindrical shape, while rotating in accordance with the movement of the film (200), as preprocessing for causing air, which is taken into the film (200), to be released to the outside at a position at which the film (200) is reduced in width to be folded by a pair of pinch rolls (100) and which is closer to the pair of pinch rolls (100) than a position where a width of the film (200) starts to be reduced.

## Description

### BACKGROUND OF THE INVENTION

### Field of the Invention

The present invention relates to an inflation molding apparatus and an inflation molding method.

### Description of Related Art

A technique of inflation molding in which air is fed toward a molten resin extruded into a cylindrical shape to mold a film serving as a product is known (for example, Japanese Unexamined Patent Publication No. 2022-156852). In inflation molding, air is fed to the inner surface side of a molten resin extruded into a cylindrical shape to swell the molten resin in a thin-film cylindrical shape in a state called a bubble, and air is applied to the outer surface of the bubble to cool the bubble and to form a cylindrical film. The cylindrical film is transported in a folded state by being pinched between a pair of pinch rolls and is then wound.

### SUMMARY OF THE INVENTION

In a case where the cylindrical film subjected to inflation molding is pinched and folded by the pair of pinch rolls, unintended air may enter between the films and portions called air pockets may be formed. The air pockets are likely to be generated in a setup stage in which the cylindrical film is pinched between the pair of pinch rolls for the first time. In the related art, in a case where air pockets are generated, a worker has performed work such as making slits in the film with a blade such as a cutter. In contrast, with the automation of the inflation molding, it is desired to suppress the generation of air pockets or to automatically perform work of eliminating generated air pockets.

An object of the present invention is to automatically suppress or eliminate air pockets that may be generated in a case where a cylindrical film subjected to inflation molding is folded.

An inflation molding apparatus according to an aspect of the present invention completed for such an object includes a deaeration roll that punches a hole or makes a slit in a cylindrical film, which is molded by feeding air toward a molten resin extruded into a cylindrical shape, while rotating in accordance with a movement of the film, as preprocessing for causing air, which is taken into the film, to be released to an outside at a position at which the film is reduced in width to be folded by a pair of pinch rolls and which is closer to the pair of pinch rolls than a position where a width of the film starts to be reduced.

Here, a distance between the deaeration roll and the pinch roll may be 500 mm or less.

Further, an inflation molding apparatus according to another aspect of the present invention completed for such an object includes: a roll that is disposed on a downstream side of a pair of pinch rolls, changes a tilt of a cylindrical film transported in a state in which the film is folded by the pair of pinch rolls, and further transports the film to a downstream side, and that is a tilt-changing roll first changing the tilt of the film folded by the pair of pinch rolls; and a deaeration roll that punches a hole or makes a slit in the film while rotating in accordance with a movement of the film, as processing for releasing air, which is taken into the film, between the pinch rolls and the tilt-changing roll.

Furthermore, an inflation molding apparatus according to another aspect of the present invention completed for such an object includes a roll that is disposed on a downstream side of a pair of pinch rolls, changes a tilt of a cylindrical film transported in a state in which the film is folded by the pinch rolls, and further transports the film to a downstream side, and that is a tilt-changing roll first changing the tilt of the film folded by the pinch rolls. The tilt-changing roll functions as a deaeration roll that punches a hole or makes a slit in the film as processing for releasing air taken into the film.

Here, the deaeration roll may be a roll including a protrusion portion on a surface thereof, and may punch the hole in the film while rotating in accordance with the movement of the film in a state of being pressed against the film.

In addition, the deaeration roll may allow the protrusion portion to be accommodated therein and may allow the protrusion portion to protrude outward at a predetermined timing.

Further, the deaeration roll may be a roll including a circular blade, and may make the slit in the film while rotating in accordance with the movement of the film in a state of being pressed against the film.

Furthermore, the deaeration roll may be configured to be separated from and come into contact with the film.

In addition, an inflation molding method according to another aspect of the present invention completed for such an object includes: causing a deaeration roll to punch a hole or make a slit in a cylindrical film, which is molded by feeding air toward a molten resin extruded into a cylindrical shape, while rotating in accordance with a movement of the film, as preprocessing for causing air, which is taken into the film, to be released to an outside at a position at which the film is reduced in width to be folded by a pair of pinch rolls and which is closer to the pair of pinch rolls than a position where a width of the film starts to be reduced.

Further, an inflation molding method according to another aspect of the present invention completed for such an object includes: causing a deaeration roll to punch a hole or make a slit in a cylindrical film, which is transported in a state in which the film is folded by a pair of pinch rolls, while rotating in accordance with a movement of the film, as processing for releasing air, which is taken into the film, to an outside between the pair of pinch rolls and a roll which is disposed on a downstream side of the pinch rolls, changes a tilt of the film, and further transports the film to a downstream side, and which is a tilt-changing roll first changing the tilt of the film folded by the pinch rolls.

Furthermore, an inflation molding method according to another aspect of the present invention completed for such an object includes: causing a roll to punch a hole or make a slit in a cylindrical film, which is transported in a state in which the film is folded by a pair of pinch rolls, as processing for releasing air taken into the film, the roll being disposed on a downstream side of the pair of pinch rolls, changing a tilt of the film, and further transporting the film to a downstream side, the roll being a tilt-changing roll first changing the tilt of the film folded by the pinch rolls.

According to the present invention, it is possible to automatically suppress or eliminate air pockets that may be generated in a case where a cylindrical film subjected to inflation molding is folded.

### BRIEF DESCRIPTION OF THE DRAWINGS

FIG. 1 is a diagram illustrating a part of a configuration of an inflation molding apparatus according to a first embodiment.
FIGS. 2A and 2B are diagrams showing a specific example of a punching roll.
FIGS. 3A and 3B are diagrams showing a modification example of a deaeration roll.
FIG. 4 is a diagram illustrating a part of a configuration of an inflation molding apparatus according to a second embodiment.

### DETAILED DESCRIPTION OF THE INVENTION

Hereinafter, embodiments of the present invention will be described in detail with reference to the accompanying drawings.

### <First embodiment>

### [Configuration of inflation molding apparatus 1]

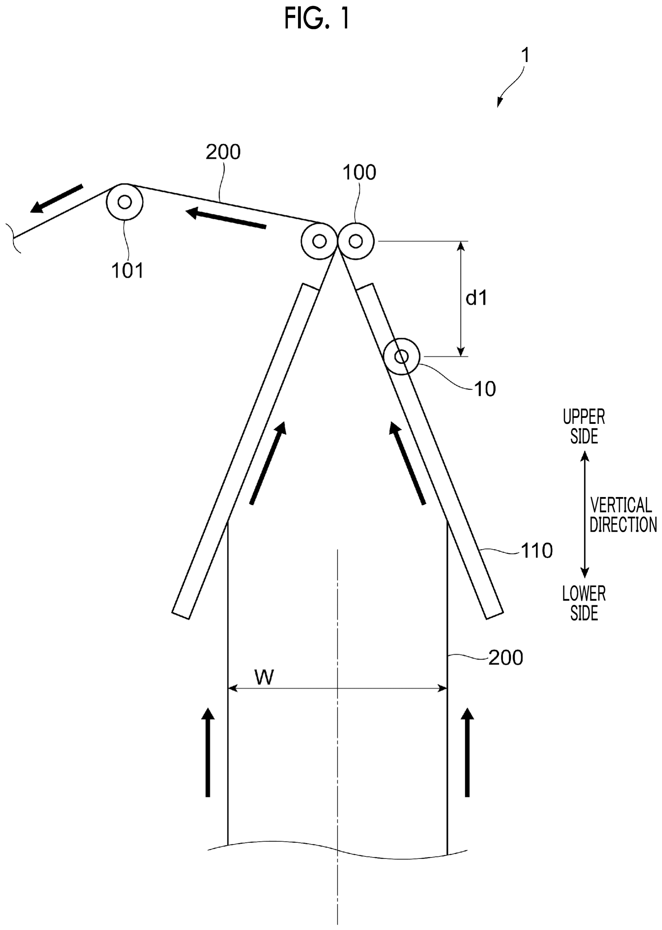

FIG. 1 is a diagram illustrating a part of a configuration of an inflation molding apparatus 1 according to a first embodiment.

The inflation molding apparatus 1 shown in FIG. 1 is an apparatus that molds a film 200 made of a resin as a product with inflation molding. The inflation molding apparatus 1 discharges a molten resin, which is obtained by heating the resin used as the material of the film 200 serving as a product to a molten state, from an annular die serving as a die head, and feeds air to an inner surface side of the molten resin formed in a cylindrical shape. Then, the molten resin swells, so that a thin-film cylindrical molten resin is formed. The inflation molding apparatus 1 applies air serving as cooling air to an outer surface side of the formed thin-film cylindrical molten resin to solidify the thin-film cylindrical molten resin. Accordingly, the cylindrical film 200 shown in FIG. 1 is molded. The molded film 200 is transported in a direction indicated by thick arrows shown in FIG. 1. Hereinafter, a direction from which the film 200 is transported may be referred to as an "upstream side", and a direction to which the film 200 is transported may be referred to as a "downstream side". Further, an up-down direction in FIG. 1 indicates a vertical direction.

As shown in FIG. 1, the inflation molding apparatus 1 includes a pair of guide parts 110 that guides the transport of the film 200 and a pair of pinch rolls 100 that folds the film 200. In addition, the inflation molding apparatus 1 includes a transport roll that is disposed on the downstream side of the pair of pinch rolls 100, changes a tilt of the film 200 transported in a state in which the film 200 is folded by the pair of pinch rolls 100, and further transports the film 200 to the downstream side, and that is a roll (hereinafter, referred to as a "tilt-changing roll") 101 first changing the tilt of the film 200 folded by the pair of pinch rolls 100. The "roll" in the present invention refers to a member that rotates in accordance with the movement of the film 200 in a state of being in contact with the film 200.

The pair of guide parts 110 is plate-shaped or fence-shaped members for guiding the outer surfaces of the molded cylindrical film 200 such that a film width w of the film 200 gradually decreases and for guiding the film 200 toward the pair of pinch rolls 100. The pair of pinch rolls 100 is disposed on the upper side of the pair of guide parts 110 in the vertical direction. The pair of pinch rolls 100 is driven to rotate by a motor (not shown), folds the film 200 flat while pulling up the film 200 guided by the pair of guide parts 110, and feeds the film 200 toward the tilt-changing roll 101 provided on the downstream side as it is.

The tilt-changing roll 101 changes the tilt of the film 200 transported from the upstream side in a state in which the film 200 is folded by the pair of pinch rolls 100, and further transports the film 200 to the downstream side. Specifically, the tilt-changing roll 101 is a roll in which the angle of the path of the film 200 is changed to 180 degrees or less. On the downstream side of the tilt-changing roll 101, the film 200 transported from the tilt-changing roll 101 is wound by a winding machine (not shown).

### (Punching roll 10)

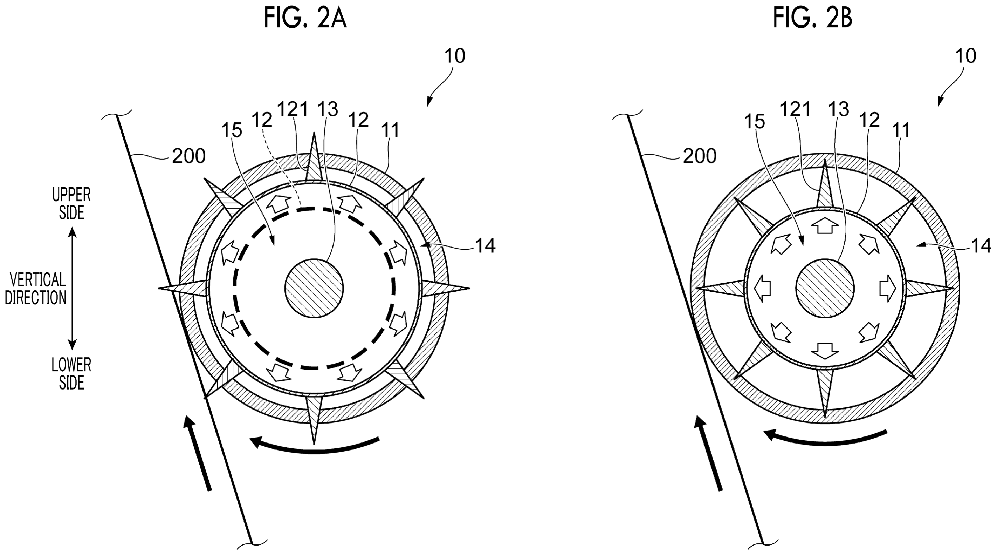

The inflation molding apparatus 1 includes a punching roll 10 that functions as a deaeration roll. The punching roll 10 is rotatable in accordance with the transport of the film 200, and includes protrusion portions, which are formed of needles or the like for punching holes in the film 200, on the surface. A specific example of the configuration of the punching roll 10 will be described later with reference to FIGS. 2A and 2B.

The punching roll 10 is installed on the pair of guide parts 110. The punching roll 10 performs preprocessing for causing air, which is taken into the film 200, to be released to the outside during the folding of the film 200 at a position at which the cylindrical film 200 is reduced in width to be folded by the pair of pinch rolls 100 and which is closer to the pair of pinch rolls 100 than a position where the width of the film 200 starts to be reduced. Specifically, the punching roll 10 punches holes in the film 200 as preprocessing.

It is preferable that the punching roll 10 is disposed such that a distance d1 between the punching roll 10 and the pair of pinch rolls 100 is not too long. In a case where the distance d1 is too long, a timing at which the punching roll 10 punches holes in the cylindrical film 200 becomes early. Accordingly, the air inside the cylindrical film 200 is likely to be released to the outside. In this case, it takes time to secure a sufficient film width w. Further, molding is also likely to be unstable. For this reason, it is preferable that the distance d1 is 500 mm or less. In a case where the distance d1 is set to 500 mm or less, the air inside the folded film 200 is less likely to be released and molding is less likely to be unstable.

### [Specific example of punching roll 10]

FIGS. 2A and 2B are diagrams showing a specific example of the punching roll 10.

The punching roll 10 is a rotating body that transports the film 200 to the downstream side while being rotated in accordance with the movement of the film 200 in a state in which the punching roll 10 is pressed against the film 200. The punching roll 10 includes a cylindrical outer rotating member 11 that is rotatable in a state of being pressed against the film 200 and a cylindrical inner rotating member 12 that is rotatably disposed inside the outer rotating member 11 and includes a plurality of protrusion portions 121 arranged in a circumferential direction. Further, the punching roll 10 includes a columnar shaft body 13 serving as a rotary shaft of the outer rotating member 11 and the inner rotating member 12. The shaft body 13 is fixed to a part of the pair of guide parts 110 via a support member and a fixing member (not shown).

As shown in FIG. 2A, the punching roll 10 can punch holes in the film 200 while rotating in accordance with the movement of the film 200 in a state in which the protrusion portions 121 protrude outward and the punching roll 10 is pressed against the film 200. Further, as shown in FIG. 2B, the punching roll 10 can transport the film 200 while rotating in accordance with the movement of the film 200 in a state in which the protrusion portions 121 are accommodated in the punching roll 10 and the punching roll 10 is pressed against the film 200.

FIG. 2A shows an aspect in which the punching roll 10 punches holes in the film 200 while rotating in accordance with the movement of the film 200 in a state in which the protrusion portions 121 protrude outward. That is, in a state in which the protrusion portions 121 protrude outward, the punching roll 10 can function as a deaeration roll for punching holes in the film 200.

FIG. 2B shows an aspect in which the punching roll 10 rotates in accordance with the movement of the film 200 in a state in which the protrusion portions 121 are accommodated in the punching roll 10. That is, the punching roll 10 functions as a transport roller that transports the film 200 in a state in which the protrusion portions 121 are accommodated in the punching roll 10.

The functions of the punching roll 10 of causing the protrusion portions 121 to protrude and accommodating the protrusion portions 121 can be realized by, for example, the following configuration. That is, a space 14 is formed between the outer rotating member 11 and the inner rotating member 12. Further, a space 15 is formed between the inner rotating member 12 and the shaft body 13. The inner rotating member 12 is formed of an elastic member such as rubber. The inner rotating member 12 swells in a direction in which the diameter is increased (a direction indicated by white arrows) in a case where air is fed into the space 15, and the inner rotating member 12 shrinks in a direction in which the diameter is reduced in a case where the air is released from the space 15.

Since the punching roll 10 shown in FIG. 2B is in a state in which the air in the space 15 is released, the inner rotating member 12 shrinks and the protrusion portions 121 are accommodated in the punching roll 10. In a case where air is fed into the space 15 shown in FIG. 2B, the inner rotating member 12 swells in the direction indicated by white arrows. Accordingly, the protrusion portions 121 penetrate the outer rotating member 11 and protrude outward as shown in FIG. 2A. A broken line shown in FIG. 2A indicates the position of the inner rotating member 12 before the air is fed into the space 15.

Here, a method of feeding air into the space 15 shown in FIG. 2B and a method of releasing air from the space 15 shown in FIG. 2A are not particularly limited. For example, the shaft body 13 may be provided with an air duct that is connected to the outside and may have a function of feeding high-pressure air toward the space 15 and a function of sucking and exhausting the air present in the space 15.

### [Modification example 1]

The punching roll 10 shown in FIGS. 2A and 2B can punch holes in the film 200 at a necessary timing since the punching roll 10 allows the protrusion and accommodation of the protrusion portions 121. However, the present invention is not limited thereto. For example, the deaeration roll of the present invention may be a punching roll that always includes a plurality of protrusion portions on the surface thereof and is movable in a direction away from the film 200 and a direction toward the film 200. In this case, the punching roll can approach the film 200 to punch holes at a predetermined timing (for example, at the timing of setup) and can be separated from the film 200 at other times not to punch holes.

### [Modification example 2]

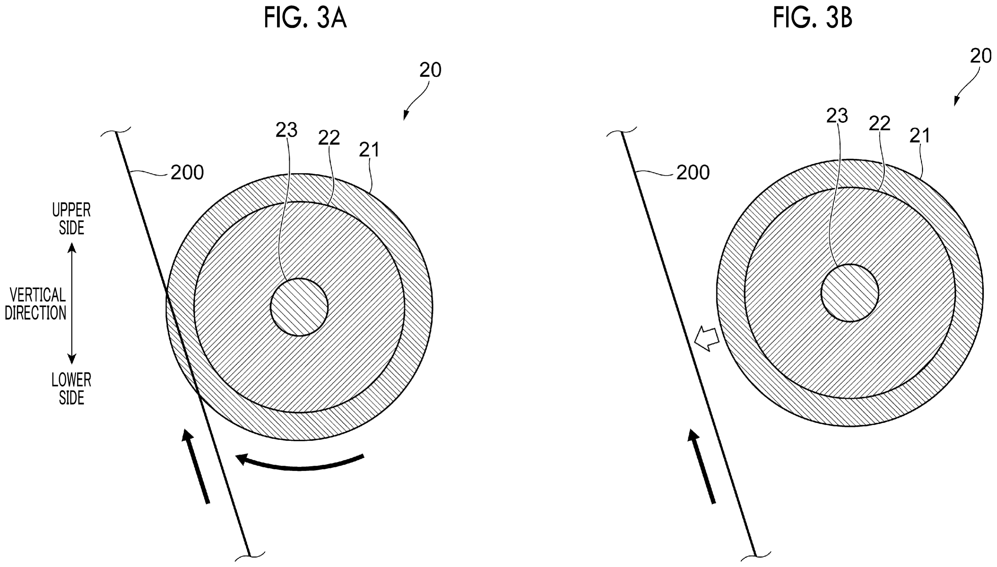

FIGS. 3A and 3B are diagrams showing a modification example of the deaeration roll.

FIGS. 3A and 3B show a slitting roll 20 as a modification example of the deaeration roll. The slitting roll 20 is a roll that makes slits in the film 200 while rotating in accordance with the movement of the film 200 in a state of being pressed against the film 200.

The slitting roll 20 includes a disc-shaped rotating member 22 that includes a circular blade 21 in a circumferential direction and is rotatable in a state of pressing the circular blade 21 against the film 200, and a columnar shaft body 23 that serves as a rotary shaft of the rotating member 22. The slitting roll 20 is disposed at the same position as the punching roll 10 shown in FIGS. 2A and 2B described above, but is movable in a direction toward the film 200 and a direction away from the film 200. For this reason, the slitting roll 20 comes into contact with the film 200 as shown in FIG. 3A at a predetermined timing (for example, at the timing of setup) to make slits in the film 200. Further, the slitting roll 20 is separated from the film 200 as shown in FIG. 3B at other times not to make slits.

One slitting roll 20 may be used, but a plurality of slitting rolls 20 may be arranged side by side in the width direction of the film 200. Accordingly, slits can be made in a wide range of the film 200. Therefore, even in a case where a position where air pockets are generated is not constant, the generation of the air pockets can be suppressed and the generated air pockets can be eliminated without being missed.

In summary, the inflation molding apparatus 1 according to the first embodiment has only to have the following configuration, and can take various embodiments.

That is, the inflation molding apparatus 1 is an inflation molding apparatus including the punching roll 10 or the slitting roll 20 that punches holes or makes slits in the film 200 while rotating in accordance with the movement of the film 200, as preprocessing for causing air, which is taken into the film 200, to be released to the outside at a position at which the cylindrical film 200 molded by feeding air toward the molten resin extruded into a cylindrical shape is reduced in width to be folded by the pair of pinch rolls 100 and which is closer to the pair of pinch rolls 100 than a position where the width of the film 200 starts to be reduced.

Accordingly, before the pair of pinch rolls 100 folds the cylindrical film 200, holes are automatically punched in the cylindrical film 200 or slits are automatically made in the cylindrical film 200. As a result, since air inside the folded film 200 is removed, the generation of air pockets can be automatically suppressed.

Here, a distance d1 between the punching roll 10 or the slitting roll 20 and the pair of pinch rolls 100 may be 500 mm or less.

In a case where the distance between the punching roll 10 or the slitting roll 20 and the pair of pinch rolls 100 exceeds 500 mm, a timing at which the punching roll 10 or the slitting roll 20 punches holes or makes slits in the cylindrical film 200 becomes earlier. For this reason, air inside the cylindrical film 200 is likely to be released, and it takes time to secure the sufficient film width w. Further, molding is likely to be unstable. On the other hand, in a case where the distance d1 is set to 500 mm or less, air inside the folded film 200 is less likely to be released and molding is less likely to be unstable.

Further, the punching roll 10 is a roll that includes the protrusion portions 121 on the surface thereof, and may punch holes in the film 200 while rotating in accordance with the movement of the film 200 in a state of being pressed against the film 200.

Accordingly, the punching roll 10 including the protrusion portions 121 on the surface thereof rotates in accordance with the movement of the film 200 in a state in which the protrusion portions 121 are pressed against the film 200. As a result, holes can be automatically punched in the film 200.

Furthermore, the punching roll 10 may allow the protrusion portions 121 to be accommodated therein and may allow the protrusion portions 121 to protrude outward at a predetermined timing.

Accordingly, the punching roll 10 can protrude the protrusion portions 121 outward at a necessary timing (for example, at the timing of setup) to punch holes in the film 200, and can accommodate the protrusion portions 121 therein at an unnecessary timing not to punch holes in the film 200.

In addition, the punching roll 10 or the slitting roll 20 may be configured to be separated from and come into contact with the film 200.

The punching roll 10 or the slitting roll 20 can be caused to come into contact with the film 200 at a necessary timing (for example, at the timing of setup) to punch holes in the film 200. Further, the punching roll 10 or the slitting roll 20 can be separated from the film 200 at an unnecessary timing.

Furthermore, an inflation molding method according to another embodiment of the present invention completed for such an object is an inflation molding method including: causing the punching roll 10 or the slitting roll 20 to punch holes or make slits in the film 200 while rotating in accordance with the movement of the film 200, as preprocessing for causing air, which is taken into the film 200, to be released to the outside at a position at which the cylindrical film 200 molded by feeding air toward the molten resin extruded into a cylindrical shape is reduced in width to be folded by the pair of pinch rolls 100 and which is closer to the pinch rolls than a position where the width of the film starts to be reduced.

### <Second embodiment>

### [Configuration of inflation molding apparatus 2]

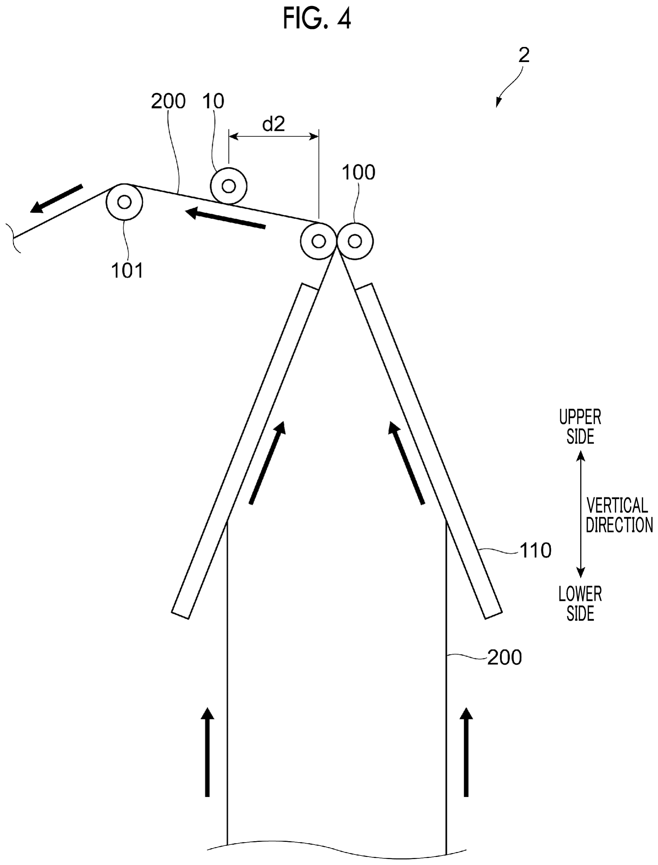

FIG. 4 is a diagram illustrating a part of a configuration of an inflation molding apparatus 2 according to a second embodiment.

The configuration of the inflation molding apparatus 2 shown in FIG. 4 is basically the same as the configuration of the inflation molding apparatus 1 according to the first embodiment described above. That is, the inflation molding apparatus 2 includes a pair of guide parts 110, a pair of pinch rolls 100 that folds a film 200, and a tilt-changing roll 101 that changes the tilt of the film 200 and transports the film 200 to a downstream side.

The inflation molding apparatus 2 includes a punching roll 10 as a deaeration roll. The punching roll 10 of the inflation molding apparatus 2 has the same function as the punching roll 10 of the inflation molding apparatus 1, but is disposed at a location different from that of the punching roll 10 of the inflation molding apparatus 1. That is, the punching roll 10 of the inflation molding apparatus 2 is disposed between the pair of pinch rolls 100 and the tilt-changing roll 101. Accordingly, the punching roll 10 of the inflation molding apparatus 2 punches holes in the film 200 as processing for releasing air, which is taken into the film 200, between the pair of pinch rolls 100 and the tilt-changing roll 101.

It is preferable that the punching roll 10 of the inflation molding apparatus 2 is disposed such that a distance d2 between the punching roll 10 and the pair of pinch rolls 100 is not too long. In a case where the distance d2 is too long, a timing at which the punching roll 10 punches holes in the film 200 is delayed. In a case where the timing at which the punching roll 10 punches holes in the film 200 is delayed, air pockets are likely to be generated in the film 200 that is transported between the pair of pinch rolls 100 and the tilt-changing roll 101. Further, it is difficult to eliminate generated air pockets.

For this reason, it is preferable that the punching roll 10 of the inflation molding apparatus 2 is not disposed on the downstream side of the tilt-changing roll 101. That is, it is preferable that the punching roll 10 is disposed between the pair of pinch rolls 100 and the tilt-changing roll 101. In addition, it is preferable that the punching roll 10 is disposed such that the distance d2 is 500 mm or less.

### [Modification example 1]

In the example shown in FIG. 4, the punching roll 10 as the deaeration roll is disposed between the pair of pinch rolls 100 and the tilt-changing roll 101. However, the tilt-changing roll 101 may have a function of the deaeration roll. That is, a plurality of protrusion portions may be provided on the surface of the tilt-changing roll 101, and the plurality of protrusion portions may punch holes in the film 200 at a timing at which the film 200 comes into contact with the tilt-changing roll 101. In this case, since the tilt-changing roll 101 functions as the deaeration roll, it is not necessary to newly secure a position at which the punching roll 10 is to be disposed.

### [Modification example 2]

Even in the inflation molding apparatus 2 according to the second embodiment, the slitting roll 20 shown in FIGS. 3A and 3B may be disposed instead of the punching roll 10 shown in FIGS. 2A and 2B as in the inflation molding apparatus 1 according to the first embodiment.

In summary, the inflation molding apparatus 2 according to the second embodiment has only to have the following configuration, and can take various embodiments.

That is, the inflation molding apparatus 2 is an inflation molding apparatus including: the roll that is disposed on the downstream side of the pair of pinch rolls 100, changes a tilt of the film 200 transported in a state in which the film 200 is folded by the pair of pinch rolls 100, and further transports the film 200 to the downstream side, and that is the tilt-changing roll 101 first changing the tilt of the film 200 folded by the pair of pinch rolls 100; and the punching roll 10 or the slitting roll 20 that punches holes or makes slits in the film 200 while rotating in accordance with the movement of the film 200, as processing for releasing air, which is taken into the film 200, between the pair of pinch rolls 100 and the tilt-changing roll 101.

Accordingly, after the pair of pinch rolls 100 folds the cylindrical film 200, holes are automatically punched in the folded film 200 or slits are automatically made in the folded film 200. As a result, generated air pockets are automatically eliminated. Further, in a case where the punching roll 10 or the slitting roll 20 is disposed on the downstream side of the tilt-changing roll 101, a timing at which the punching roll 10 punches holes or the slitting roll 20 makes slits in the film 200 is delayed. In this case, air pockets are likely to be generated in the film 200 that is transported between the pair of pinch rolls 100 and the tilt-changing roll 101, and it is difficult to eliminate generated air pockets. On the other hand, in a case where the punching roll 10 or the slitting roll 20 is disposed on the upstream side of the tilt-changing roll 101, air pockets are less likely to be generated in the film 200 that is transported between the pair of pinch rolls 100 and the tilt-changing roll 101. Furthermore, it is easy to eliminate generated air pockets.

In addition, the tilt-changing roll 101 may also function as the punching roll 10 or the slitting roll 20.

Accordingly, since the tilt-changing roll 101 functions as the punching roll 10 or the slitting roll 20, it is not necessary to newly secure a position at which the punching roll 10 or the slitting roll 20 is to be disposed. As a result, the configuration of the inflation molding apparatus 2 can be simplified.

Further, an inflation molding method according to another embodiment of the present invention completed for such an object is an inflation molding method including: causing the punching roll 10 or the slitting roll 20 to punch holes or make slits in the cylindrical film 200, which is transported in a state in which the film 200 is folded by a pair of pinch rolls 100, while rotating in accordance with the movement of the film 200, as processing for releasing air, which is taken into the film 200, to the outside between the pair of pinch rolls 100 and the roll which is disposed on the downstream side of the pair of pinch rolls 100, changes a tilt of the film 200, and further transports the film 200 to the downstream side, the roll being the tilt-changing roll 101 first changing the tilt of the film 200 folded by the pair of pinch rolls 100.

Furthermore, an inflation molding method according to another embodiment of the present invention completed for such an object is an inflation molding method including: causing the roll to punch holes or make slits in the cylindrical film 200, which is transported in a state in which the film 200 is folded by a pair of pinch rolls 100, as processing for releasing air that is taken into the film 200, the roll being disposed on the downstream side of the pair of pinch rolls 100, changing a tilt of the film 200, and further transporting the film 200 to the downstream side, the roll being the tilt-changing roll 101 first changing the tilt of the film 200 folded by the pair of pinch rolls 100.

### <Others>

Although the present embodiment has been described above, the present invention is not limited to the above-described embodiments. Further, the effects of the present invention are also not limited to those described in the above-described embodiments.

For example, only the punching roll 10 as the deaeration roll is disposed between the pair of pinch rolls 100 and the tilt-changing roll 101 in the example shown in FIG. 4, but the present invention is not limited thereto. In addition to the punching roll 10, for example, a transport roll that does not change the tilt of the film 200 may be disposed.

### Brief Description of the Reference Symbols

1: Inflation molding apparatus
10: Punching roll
11: Outer rotating member
12: Inner rotating member
13, 23: Shaft body
20: Slitting roll
21: Circular blade
22: Rotating member
100: Pair of pinch rolls
110: Pair of guide parts
121: Protrusion portion
200: Film

## Claims

1. An inflation molding apparatus (1, 2) comprising:
a deaeration roll that punches a hole or makes a slit in a cylindrical film (200), which is molded by feeding air toward a molten resin extruded into a cylindrical shape, while rotating in accordance with a movement of the film (200), as preprocessing for causing air, which is taken into the film (200), to be released to an outside at a position at which the film (200) is reduced in width to be folded by a pair of pinch rolls (100) and which is closer to the pinch rolls (100) than a position where a width of the film (200) starts to be reduced.

2. The inflation molding apparatus (1, 2) according to claim 1,
wherein a distance (d1, d2) between the deaeration roll and the pinch roll (100) is 500 mm or less.

3. An inflation molding apparatus (1, 2) comprising:
a roll (101) that is disposed on a downstream side of a pair of pinch rolls (100), changes a tilt of a cylindrical film (200) transported in a state in which the film (200) is folded by the pinch rolls (100), and further transports the film (200) to a downstream side, the roll (101) being a tilt-changing roll (101) first changing the tilt of the film (200) folded by the pinch rolls (100); and
a deaeration roll that punches a hole or makes a slit in the film (200) while rotating in accordance with a movement of the film (200), as processing for releasing air, which is taken into the film (200), between the pinch rolls (100) and the tilt-changing roll (101).

4. An inflation molding apparatus (1, 2) comprising:
a roll (101) that is disposed on a downstream side of a pair of pinch rolls (100), changes a tilt of a cylindrical film (200) transported in a state in which the film (200) is folded by the pinch rolls (100), and further transports the film (200) to a downstream side, the roll (101) being a tilt-changing roll (101) first changing the tilt of the film (200) folded by the pinch rolls (100),
wherein the tilt-changing roll (101) functions as a deaeration roll that punches a hole or makes a slit in the film (200) as processing for releasing air taken into the film (200).

5. The inflation molding apparatus (1, 2) according to any one of claims 1, 3, and 4,
wherein the deaeration roll is a roll including a protrusion portion (121) on a surface thereof, and punches the hole in the film (200) while rotating in accordance with the movement of the film (200) in a state of being pressed against the film (200).

6. The inflation molding apparatus (1, 2) according to claim 5,
wherein the deaeration roll allows the protrusion portion (121) to be accommodated therein and allows the protrusion portion (121) to protrude outward at a predetermined timing.

7. The inflation molding apparatus (1, 2) according to any one of claims 1, 3, and 4,
wherein the deaeration roll is a roll including a circular blade (21), and makes the slit in the film (200) while rotating in accordance with the movement of the film (200) in a state of being pressed against the film (200).

8. The inflation molding apparatus (1, 2) according to any one of claims 1, 3, and 4,
wherein the deaeration roll is configured to be separated from and come into contact with the film (200).

9. An inflation molding method comprising:
causing a deaeration roll to punch a hole or make a slit in a cylindrical film (200), which is molded by feeding air toward a molten resin extruded into a cylindrical shape, while rotating in accordance with a movement of the film (200), as preprocessing for causing air, which is taken into the film (200), to be released to an outside at a position at which the film (200) is reduced in width to be folded by a pair of pinch rolls (100) and which is closer to the pinch rolls (100) than a position where a width of the film (200) starts to be reduced.

10. An inflation molding method comprising:
causing a deaeration roll to punch a hole or make a slit in a cylindrical film (200), which is transported in a state in which the film (200) is folded by a pair of pinch rolls (100), while rotating in accordance with a movement of the film (200), as processing for releasing air, which is taken into the film (200), to an outside between the pair of pinch rolls (100) and a roll (101) which is disposed on a downstream side of the pinch rolls (100), changes a tilt of the film (200), and further transports the film (200) to a downstream side, the roll (101) being a tilt-changing roll (101) first changing the tilt of the film (200) folded by the pinch rolls (100).

11. An inflation molding method comprising:
causing a roll (101) to punch a hole or make a slit in a cylindrical film (200), which is transported in a state in which the film (200) is folded by a pair of pinch rolls (100), as processing for releasing air taken into the film (200), the roll (101) being disposed on a downstream side of the pair of pinch rolls (100), changing a tilt of the film (200), and further transporting the film (200) to a downstream side, the roll (101) being a tilt-changing roll (101) first changing the tilt of the film (200) folded by the pinch rolls (100).
